# EUROPEAN PATENT APPLICATION

(11) **EP 1 136 192 A2**
(43) Date of publication of application: **26.09.2001**
(21) Application number: 01301538.3
(22) Date of filing: 21.02.2001
(51) Int. Cl.: B25J 9/16, G05B 19/418

(54) **Human-machine interface for a robotic containerization system**

(30) Priority: 14.03.2000 US 525773
(71) Applicant: ABB Flexible Automation Inc., New Berlin, Wisconsin 53151-2717 (US)
(72) Inventor: Tallis, Christopher D., Lake Orion, Michigan 48360 (US); McGee, Harold M., Waterford, Michigan 48328 (US)
(74) Representative: Carpenter, David

(57) **Abstract**

A human-machine interface ("HMI") for a robotic containerization system. The interface includes a graphical representation of a work cell that has a plurality of virtual bays. Each virtual bay represents an actual bay that is configured to accept at least one type of container. Each virtual bay includes graphical indicia as to whether a container is present in the bay, the destination of the container, and the status of the container, such as whether the container is empty, partially full, or full. The graphical representation also includes an operation bar depicting information regarding the operating state of the robotic system, the fault status of the robotic system, and the most recent sort scheme for the robotic system. The HMI also provides an interface for controlling various aspects of the robotic system and for generating reports reflecting the activity of the robotic system.

## Description

### BACKGROUND OF THE INVENTION

The present invention relates to robotic systems. More particularly, the present invention relates to a robotic control system and interface for a robotic containerization system ("RCS").

Robotic systems are used for a variety of different tasks. Typically, industrial robots are used in welding, painting, and material handling applications. Before a robotic system is put in use, it is programmed to perform desired tasks. Once a system is placed online, the operation of the robotic system is monitored and controlled, as necessary, by a human operator.

In the past, robotic systems were controlled and programmed using command-line or similar interfaces, where specialized command codes were input into the systems line-by-line to accomplish programming and other control functions. Graphical interfaces have been developed more recently. The interfaces are often referred to as human-machine interfaces ("HMIs"). An HMI provides a graphical interface that permits a non-expert to program, control, and monitor the status of a robotic system. One exemplary HMI is produced by ABB Robotics, Inc. and is disclosed in U.S. Patent 5,675,229 (the "'229 patent"). The HMI shown in the '229 patent allows an "uneducated" technician to control the system without knowledge of the system's programming language. The HMI also allows the technician to direct the robot where and how to apply a weld. While this system is useful, it does not provide an appropriate interface for other types of robotic systems. Newer robotic systems are used in applications outside of industrial manufacturing. These applications include loading mail and other parcels into trays and onto pallets (a process generically referred to as "containerization"). These relatively new applications for robotic systems require HMIs with different and enhanced features from HMIs used in the past.

### SUMMARY OF THE INVENTION

Accordingly, the present invention provides an HMI for a robotic containerization system ("RCS"). The HMI provides the operator of the RCS with a variety of information regarding the RCS and allows the operator to create sort schemes that control how items are loaded into containers. The HMI is divided into several screens and includes a main screen with a graphical representation of a work cell having a plurality of virtual bays. The virtual bays represent actual bays in the RCS that are configured to accept containers. Each virtual bay includes graphical indicia as to whether a container is present in the actual bay, the destination of the container, and the status of the container; such as whether the container is empty, partially full, or full. The HMI provides addition information about the RCS through an operation bar that depicts the operating state of the RCS, the fault status of the RCS, and the most recent sort scheme for the RCS.

Various other features of the RCS are depicted in other virtual representations. The HMI may include a graphical representation of a perimeter barrier around the work cell and indicate the condition of closable access ways in the perimeter barrier. The HMI may also include a representation of a conveyor system. The HMI may include one or more pull down menus with links to other screens.

The other screens in the HMI include a startup screen that provides a visual representation of conditions necessary to place the robotic system into an automatic operation mode. A destination screen permits the combination and modification of destination codes for trays. A scheme screen permits the modification and assignment of destinations to each bay. A manual functions screen permits manual operation of at least some of the functions of the robotic system. A reports screen permits monitoring of the performance of the robotic system. An alarm screen displays alarms, faults, or both that have occurred in the robotic system. An I/O screen displays the name and status of a predetermined number of inputs and outputs of the robotic system. Finally, a maintenance screen permits the setting of passwords and other maintenance items for the RCS. The HMI may also provide a selection to allow programming of a soft PLC running within the system controller.

These are just some of the features and advantages of the present invention. Others will become apparent by a review of the drawings and details described below.

### BRIEF DESCRIPTION OF THE DRAWINGS

Fig. 1 is a partially exploded, perspective view of a robotic containerization system.

Fig. 2A is a schematic, top view of the robotic containerization system configured to load pallets.

Fig. 2B is a schematic, top view of the robotic containerization system configured to load carts.

Fig. 3 is a schematic diagram, illustrating the architecture of the control system used in the robotic containerization system.

Fig. 4 is an exemplary illustration of a main screen of the human machine interface.

Fig. 5 is an exemplary illustration of a startup screen of the human machine interface.

Fig. 6 is an exemplary illustration of a destination screen of the human machine interface.

Fig. 7 is an exemplary illustration of a scheme screen of the human machine interface.

Fig. 8 is an exemplary illustration of a manual functions screen of the human machine interface.

Fig. 9 is an exemplary illustration of a report screen of the human machine interface.

Fig. 10 is an exemplary illustration of an alarm screen of the human machine interface.

Fig. 11 is an exemplary illustration of an input/output screen of the human machine interface.

Fig. 12 is an illustration of the main screen shown in Fig. 4, with the pull-down file menu selected.

Fig. 13 is an exemplary illustration of a password screen of the human machine interface.

Before one embodiment of the invention is explained in full detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting. The use of "including" and "comprising" and variations thereof herein is meant to encompass the items listed thereafter and equivalents thereof as well as additional items.

### DETAILED DESCRIPTION

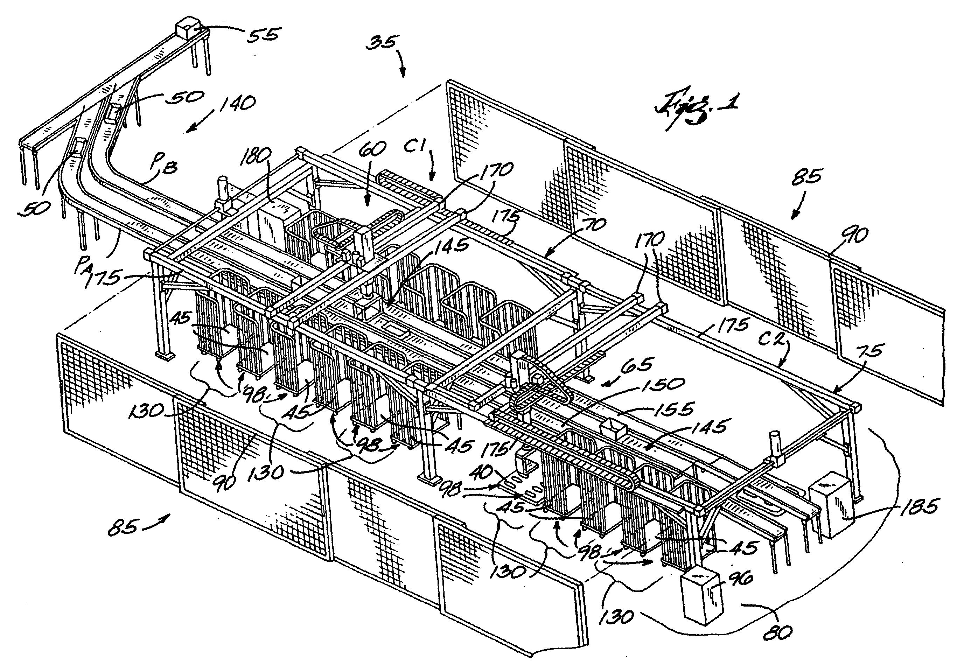

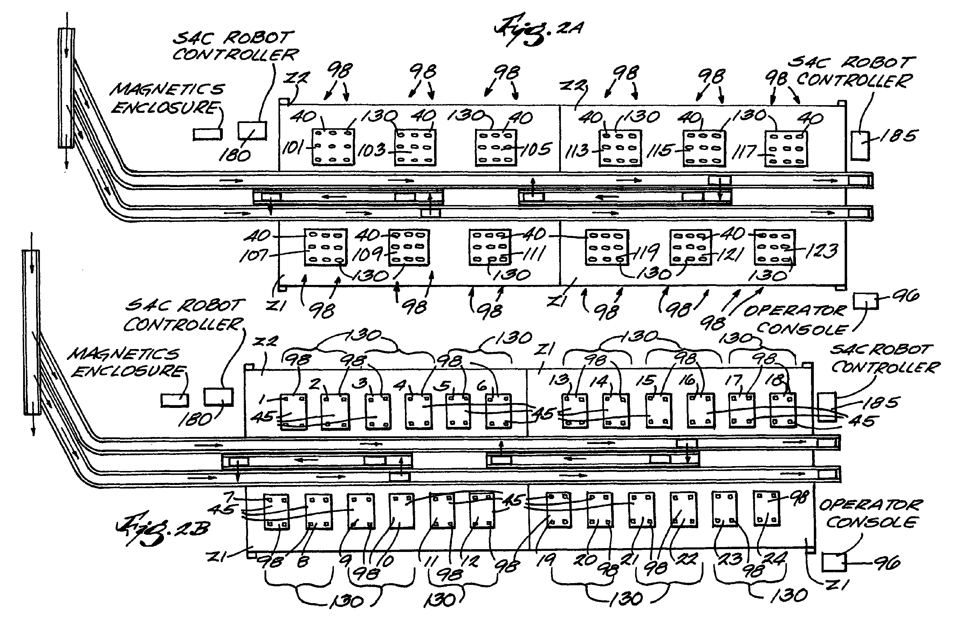

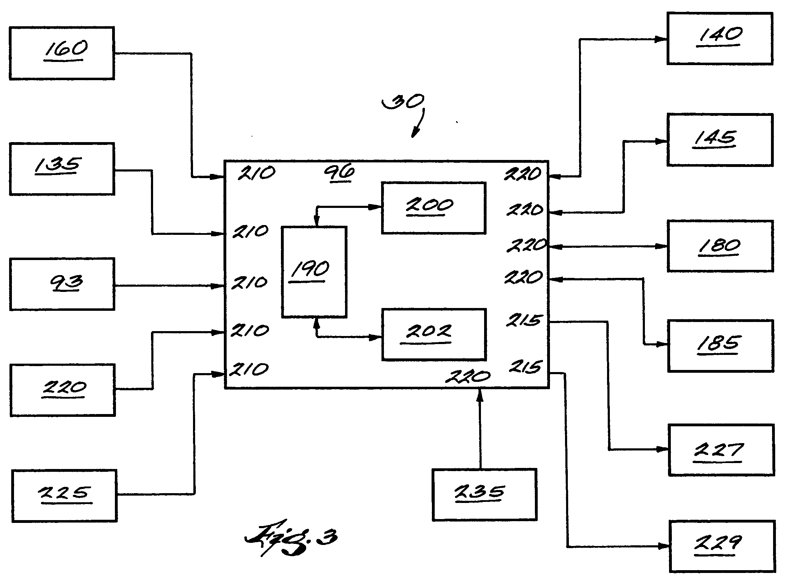

A robotic control system and interface 30 (schematically shown in Fig. 3) of the invention can be used with various robotic systems. One exemplary use of the robotic control system and interface 30 is in an RCS 35 as shown in Figs. 1, 2A, and 2B. The RCS 35 is an automated system for loading pallets 40 and carts 45 with mail trays 50 and tubs 55 based on a sort scheme. The mail trays 50 and tubs 55 (collectively referred to as "trays") contain mail (not shown). Each tray includes an identifier or destination code (which may be implemented as a bar code) that provides information for sorting the trays. In the embodiment disclosed, the destination code may include a ZIP code, a content identification number or CIN code, a day of delivery or DOD code, and/or a automation identification number or (AIN) code.

The RCS 35 includes two cells C1 and C2, each equipped with a gantry or overhead-type robot 60 and 65. Each cell C1 and C2 includes an open frame 70 and 75 that is secured to a hard surface such as a concrete floor 80. The space around the frame members may be enclosed with a perimeter fence 85, mesh, wall, or similar material. One or more access ways, doors, or gates 90 may be provided to permit access to the interior of each cell. The gates include gate interlocks 93 (schematically shown in Fig. 3) that sense whether the gates are closed and locked, closed and unlocked, or open and unlocked. The status of the gates is communicated to a system controller 96.

Each cell C1 and C2 has a plurality of places 98. One or more places 98 form bays 130. The bays 130 provide an area for pallets 40, carts 45, or similar containers (generically referred to as "containers"). Depending on the size of the container, one or more places 98 may be combined to form one larger bay 130. In the example illustrated, a cart 45 is placed in a bay having one place (as schematically shown in Fig. 2B) and a pallet 40 is placed in a bay having two places (as schematically shown in Fig. 2A). Typically, carts 45 and pallets 40 are placed together in cells C1 and C2. Bay sensors 135 (schematically shown in Fig. 3) sense the presence or absence of containers 40 and 45 in a bay and that information is communicated to the system controller 96. The containers 40 and 45 may be moved into and out of the cells C1 and C2 by non-robotic means through the access gates 90 or doors.

Each cell is divided into two zones, Z1 and Z2. An operator (not shown) may access each zone through one of the doors 90. Each bay 130 is assigned a location identifier (e.g., 1-24 in Fig. 2B or 101-123 in Fig. 2A). The location identifiers provide an exact "destination" or "address" for each bay. For example, as shown in Fig. 2A, zone Z1 of cell C1 has locations 7, 8, 9, 10, 11, and 12, zone Z2 of cell C1 has locations 1, 2, 3, 4, 5, and 6, zone Zl of cell C2 has locations 19, 20, 21, 22, 23, and 24, and zone Z2 of cell C2 has locations 13,14,15,16,17, and 18.

As shown in Fig. 1, trays are brought into the cells C1 and C2 along paths P_{A} and P_{B} by a conveyor system 140 and are directed to pick-up points 145. In the embodiment shown, two parallel conveyors 150 and 155 are positioned to move items from one end of the cells to the other. Conveyor sensors 160 (schematically shown in Fig. 3) are positioned along the conveyors 150 and 155 in order to detect the location and presence of trays 50 and 55 on the conveyors 150 and 155. Information from the conveyor sensors 160 is communicated to the system controller 96.

The robots in each cell C1 and C2 are mounted on a plurality of beams 170 spanning the cells C1 and C2. Each robot 60 and 65 is movable along respective beams 170 and the beams 170 are movable on respective tracks 175. Each robot is movable along a substantially horizontal plane over the respective cells C1 or C2 and is capable of raising and lowering a tray within the cell C1 or C2. Each robot is controlled by its own robot controller 180 or 185. One type of robot controller suitable for use in the present invention is an S4C robot controller available through ABB Flexible Automation, Inc. The robot controller 180 and 185 includes software that controls the movement of the respective robot 60 or 65. As shown in Fig. 3, the robot controller 180 interfaces with the system controller 96 and receives commands from the system controller depending on the status of the system. Of course, it should be understood that while two separate control systems are described herein, a single control system combining the functions of the robot and system controllers could be implemented.

The system controller 96, which is schematically shown in Fig. 3, controls the RCS 35. The system controller 96 may be implemented using a server, a personal computer, or similar device (generally referred to as a computer). The system controller 96 includes a microprocessor 190 and internal memory 200 and internal storage 202. The internal memory 200 allows for storage of data, and the internal storage 202 contains software for controlling the RCS 35. The software includes programming for providing a human machine interface (HMI) in the form of a graphical-user interface (GUI).

The system controller further includes communication ports 210 for connections to input devices, communication ports 215 for connections to output devices, and communication ports 220 for connections to input/output devices. The input devices include the conveyor sensors 160, the bay sensors 135, the gate interlock sensors 93, a keyboard 220, a mouse 225 and/or similar devices. The output devices include a visual display 227 and a printer 229. The input/output devices include the conveyor system 140, the robot controllers 180 and 185, and other computers 235 such as a plant computer (not shown). The connection between the system controller 96 and the other computers 235 is through a network that allows for two-way communications. In general, the system controller 96 receives signals from input units and input/output devices, processes the inputs in the microprocessor, and transmits signals to the output units and input/output devices.

Mail trays 50, tubs 55, and other items are placed on the conveyor system 140. Once inside the cells C1 and C2, the trays are directed to the pick-up points 145. At the pick up point, the robots grasp the trays and move them to the appropriate container 40 or 45, based on a currently running sort scheme. The operator (not shown), through the use of the HMI, creates the sort scheme used by the RCS. The sort scheme provides a set of instructions that determines the location to which a tray is sent. In the embodiment described, the determination of the correct location is based on the destination code.

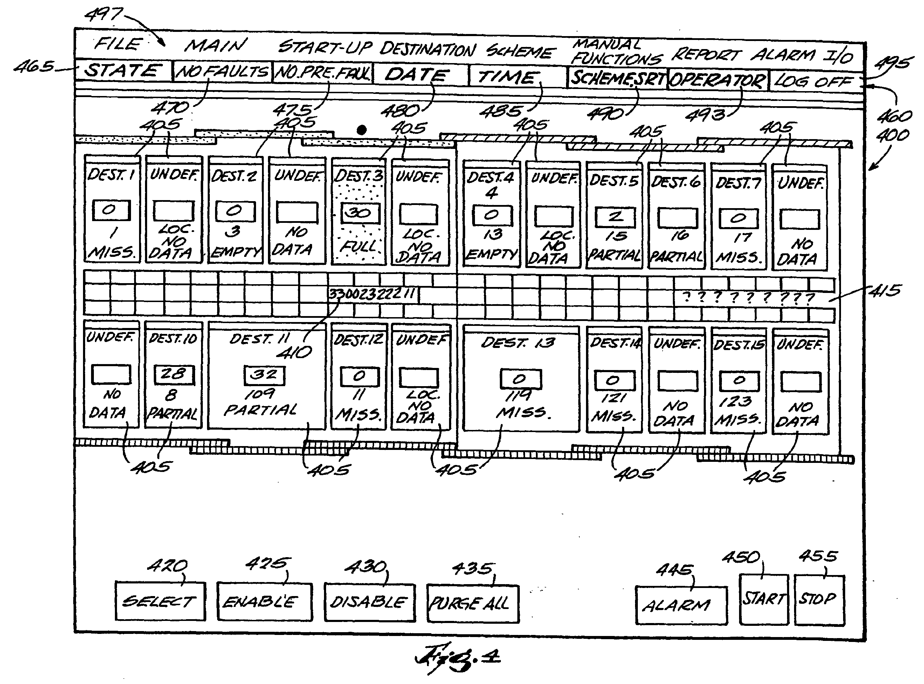

The HMI application software of the system controller 96 provides a graphical user interface (GUI) or "front end" for the operation of the RCS 35. The HMI provides a convenient method to operate and view status information of the RCS 35. The HMI also allows the operator to control the robots 60 and 65 in order to perform service operations on the robots 60 and 65. It should be noted that with Figs. 4-13 and the description below, one of ordinary skill in the art could readily create the programming code to carry out the functions described. The HMI illustrated was developed for a Windows NT environment using a variety of commonly available Windows tools, including Microsoft Visual Basic and Microsoft Data Report Designer. Of course, the invention is not limited to HMIs implemented for Windows environments, as those of ordinary skill in the art could readily implement the invention in other environments.

A main screen 400 for the HMI is shown in Fig. 4. The main screen 400 provides the user with a graphical representation of the cells C1 and C2 as viewed from the top of the RCS 35. Of course, the graphical representation of the cells will change depending on the configuration of the RCS 35.

The main screen 35 provides an initial starting point for the operator to interact with the control unit 96 and provides the current status information for the system. The main screen also displays the current sorting scheme (discussed below) according to which the incoming trays are sorted (or loaded into containers).

Each of the bays 130 of the RCS 35 are represented in the main screen 400 by a virtual bay 405. The maximum number of bays 405 within the main screen 400 corresponds to the maximum number of bays 130 possible within the RCS. For the embodiment described herein, the maximum number of bays 405 is twenty-four. However, if one or more containers 40 occupies two or more places 98, then the number of bays 405 will decrease.

The virtual layout of the cells C1 and C2 developed using the HMI can be output to the printer 229 to create a hard copy printout. The printout can be used by technicians to position containers in appropriate bays 130 and places 98.

As was described above, each bay is assigned a location or identifier. Each respective virtual bay 405 includes the location for each bay 130. The numbering scheme of the location identifiers is as follows. Starting from the left of cell C1, zone Z2 as viewed on the main screen, each place 98 is numbered from 1-6. Starting from the left of cell C1, zone Z2 as viewed on the main screen, each place 98 is numbered from 7-12. The places 98 of cell C2 are numbered similarly except that they contain an offset (in this case 12) that is added to each location number. If all the bays 130 contain a container that occupies only one place 98, then each bay is assigned the location number of the respective place. However, if a bay 130 contains a container that includes more than one place 98, then the bay is assigned the odd place number and an offset of 100 is added. For example, in cell C1, zone Z1, places 9 and 10 contain a pallet 40. The corresponding bay 130 is assigned the odd place number 9, plus an offset of 100 or a number of 109. By having the offset of 100, the control system and the operator know the bay includes more than one place.

In addition to having a location identifier, each virtual bay 405 includes a destination. For example, in the embodiment shown, the carts placed in location 5 are going to Dest_5. Each destination represents a real world locale. For example, Dest_5 may represent Milwaukee, Wisconsin. As described below, the destination is input by an operator along with the destination codes into the control system.

Each virtual bay 405 also includes the number of trays within a particular container within the bay, and the status of the container (e.g., whether the container is empty, partially full, completely full, or missing). Each virutal bay 405 may also provide graphical information through the use of colors. For example, if the container is full, the virtual bay is displayed in blue. If the container is partially full, empty or missing, the virtual bay 405 is orange, white, or gray, respectively. By providing the status of the container, the HMI informs the operator when and what container needs to be replaced. Thus, the main screen of the HMI provides a simplified representation of the RCS during operation.

If the information for a particular container is not known, then default information may be presented. For example, the information for cell C1, zone Z2, place 2 is not known, and thus, default information is displayed within that virtual bay. Default information occurs when a place has not been programmed during creation of the sort scheme (as described below).

The main screen 400 provides a graphical representation of the conveyor belts and a graphical representation of the trays moving on the conveyor belts. In addition, the main screen 400 provides a representation of the respective ZIP, CIN, DOD, and AIN codes on each tray at the pick-up points. For example, the tray at pick-up point 410 has a destination code of 3002322211. If the destination code is unknown, then the destination code is represented on the main screen by a series of question marks.

The main screen 400 also provides a graphical representation of the perimeter barrier and of gate interlock status information from the gate interlock sensors 93. The graphical representation may include colors for representing different states. The main screen 400 includes a graphical representation of the fence 85 and provides information about whether the gates 90 are open and unsecured, closed and unsecured, or closed and secured. Depending on the state of the gate 90, a different color is displayed. For example, red may represent the open and unsecured state, yellow may represent the closed and unsecured state, and green may represent a closed and secured state.

The main screen 400 provides virtual buttons 420, 425, 430, 435, and 445 to select a sort scheme, to enable a selected sort scheme, to disable a selected sort scheme, to purge stations holding left-over half trays, and to allow the user to silence an alarm if a fault occurs. The main screen also provides virtual buttons 450 and 455 to start and stop a loading or sorting cycle.

As shown in Figs. 4-13, each screen of the HMI contains common information. This information is available at the top of each screen in a display area or display bar 460. The information includes the current operating state of the system 465, an active fault indication 470, a description of the most recent fault 475, the date 480, the time 485, the currently active sort scheme 490, the name of the operator that is logged into the system 493, and a log off button 495. Color can be used for the background of the textual description for each box 465-495 to provide more information to the operator. For example, if the RCS 35 is performing a sort and no errors have occurred, then the operating state 465 may be highlighted by a green background and the active fault 470 may also be highlighted by a green background. Alternatively, if the RCS is performing a sort and an error has occurred, then the background of the operating state 465 may still be highlighted in green, while the background of the active fault 470 may be highlighted in yellow. If the fault is a critical fault, then the control system may stop the sort, change the text of the operating state 465, and change the respective background to red. Of course, other graphical representation through colors can be added to provide additional information.

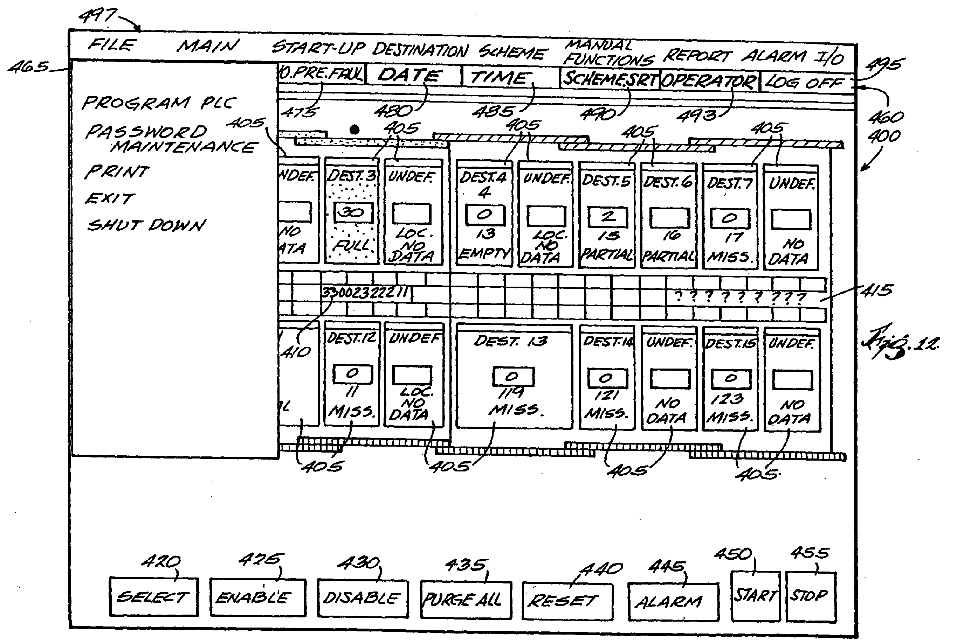

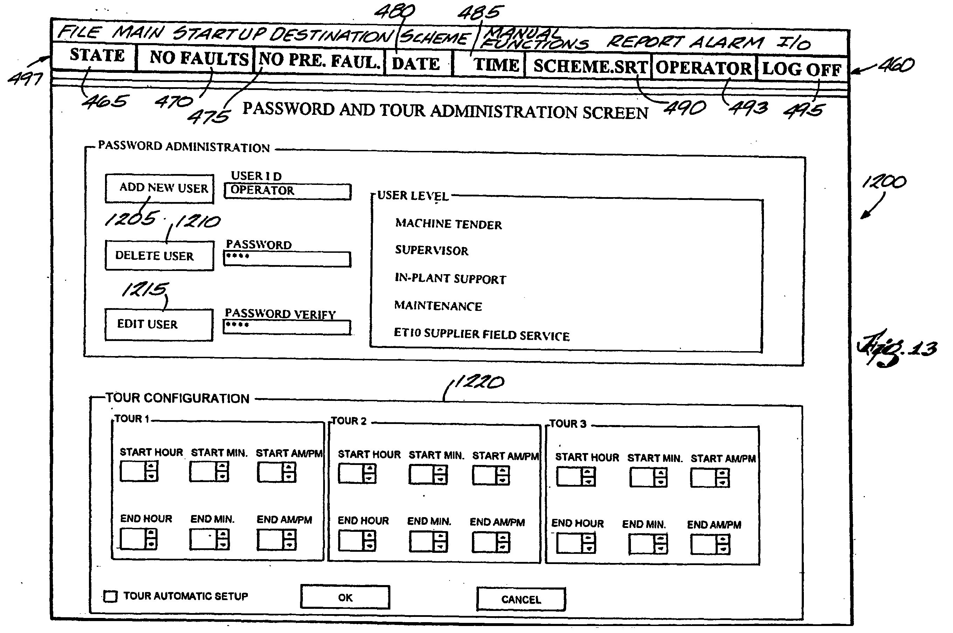

As best seen in Fig. 12, each screen contains a pull-down file menu 497, which contains several auxiliary functions. A first section allows the user to select an option to program a soft PLC for controlling the robotic system. This selection starts the software necessary to program the soft PLC that is running on the system controller 96. A second function allows the operator to go to a password maintenance screen (Fig. 13). A third function allows the operator to print the current screen to the attached printer 229. As noted, an operator can use the printout to organize the cells as graphically represented on the hardcopy printout. The file menu also has selections for exiting the application, and shutting down the system controller 96.

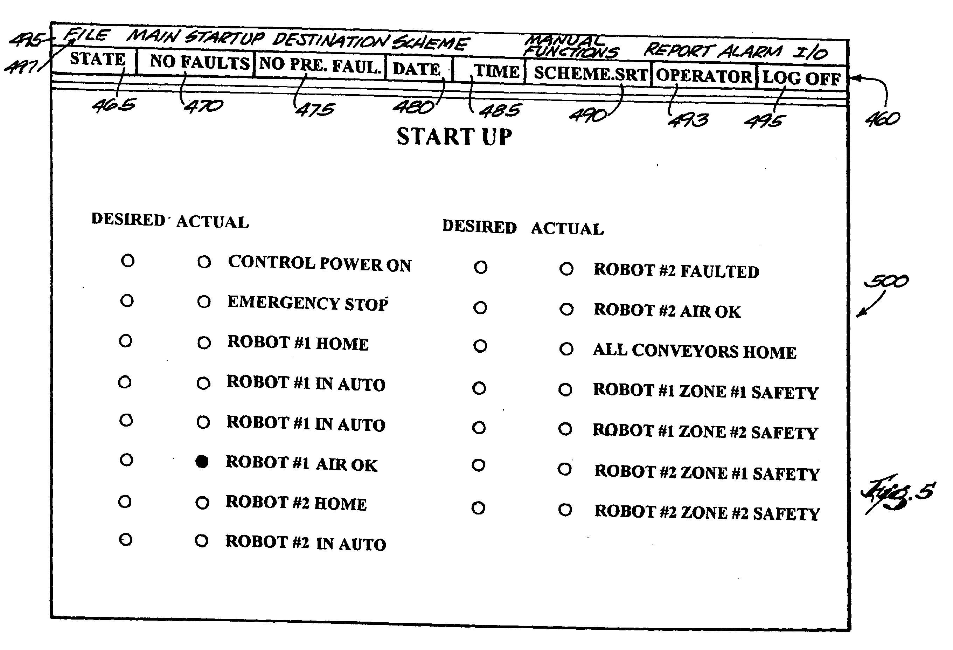

A start-up screen 500 of the HMI is shown in Fig. 5. The start-up screen 500 provides a visual representation to the operator of the conditions necessary to place the RCS 35 into automatic operation. If a particular condition is required, then the desired state indicator for the condition is lit in a particular color such as green. If the action is not desired, then the desired state indicator is lit in another color such as red. In a similar fashion, if the actual state is satisfactory, then the state indicator is green. If the actual state is unsatisfactory, then the state indicator is red. The RCS 35 is able to perform a specific action when the required system conditions, as illustrated by the desired state indicators are matched by the actual conditions, as illustrated by the actual state indicators. The internal memory 200 of the system controller 96 includes a start-up configuration that initializes the status of the desired state indicators for the start-up screen 500.

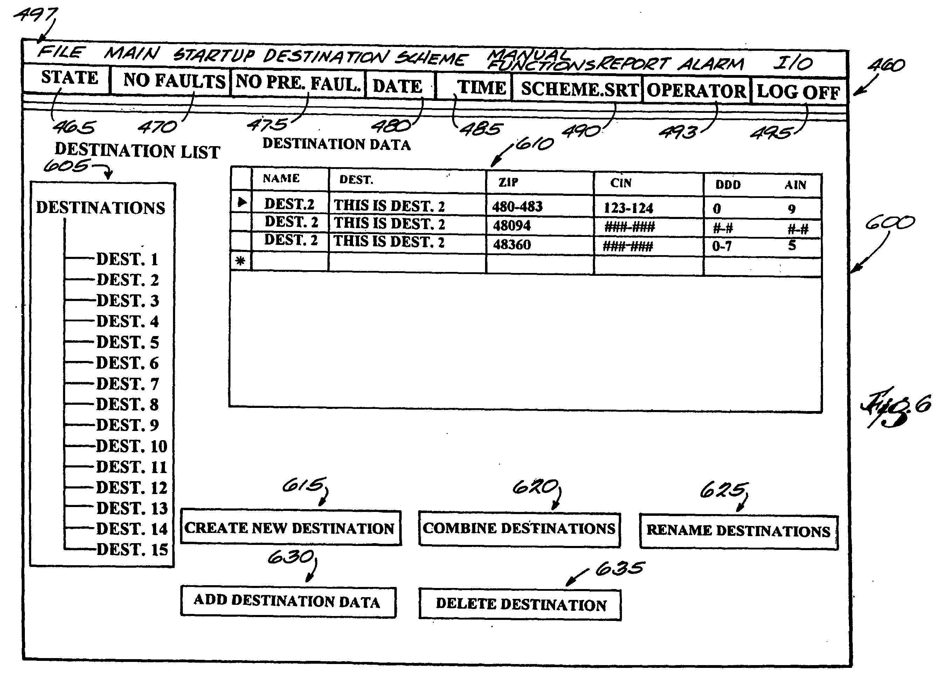

A destination screen 600 of the HMI is shown in Fig. 6. The destination screen 600 allows the operator to assign ZIP, CIN, DOD, and AIN codes or combinations of codes to destinations. Combinations of codes contain one or more destination codes and make creating sort schemes easier (as described below). The destination screen includes a destination list window 605 that provides a list of existing destinations. The existing destinations each include a destination name.

The destination screen includes a destination data window 610 that allows the operator or user to create a new destination or edit an existing destination. The destination screen also includes virtual buttons 615, 620, 625, 630, and 635 to create a new destination, combine at least two existing destinations into a new destination, rename an existing destination, add destination data to an existing destination, and delete an existing destination.

To create a new destination, the operator activates the create new destination virtual button 615. The operator then enters the name of the destination, a brief description (e.g., the name of the locale or city) for the destination, and the ZIP, CIN, DOD, and AIN codes for the destination. Combining multiple ZIP, CIN, DOD, and AIN codes into the destination makes it easier for sending non-contiguous ranges of mail to the same destination. All trays having the ZIP, CIN, DOD and AIN codes specified in the destination are sorted into the container assigned to that destination. The operator can use symbols or "wild-cards" for simplifying the data entered into the destination. For example, the second entry of Dest_2 specifies that all trays having the ZIP code 48094 will be sorted into the container assigned to Dest_2. Once the operator finishes creating the destination, the created destination is added to the destination list of the destination list box 605. The user can then edit, combine, rename, and delete destinations listed within the destination list box 605.

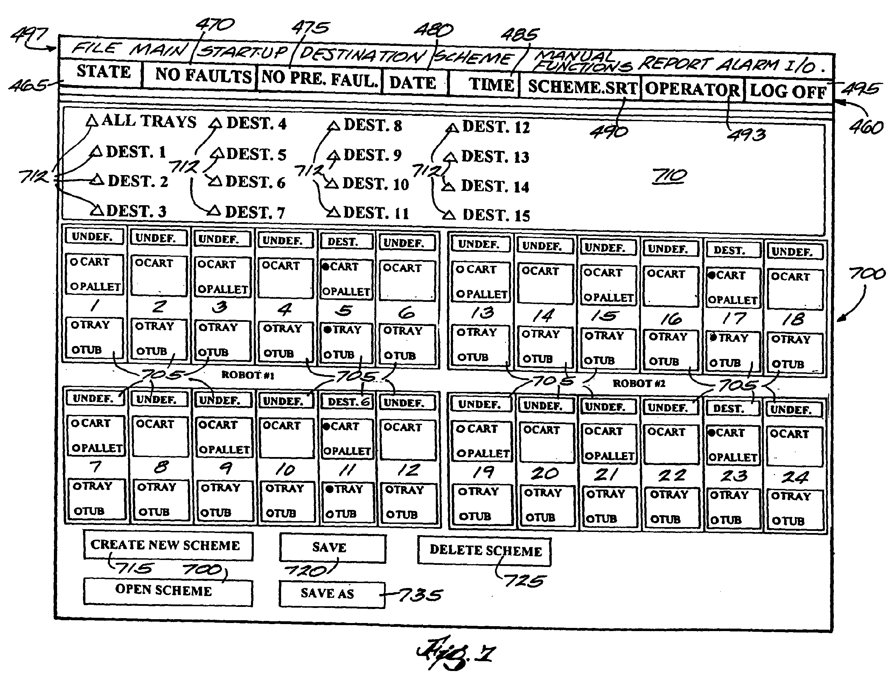

A scheme screen 700 of the HMI is shown in Fig. 7. The scheme screen 700 is used to create sort schemes. The sort scheme determines which location within the cells a tray of mail will be delivered to. The scheme screen provides a graphical representation of the bays 98 of the RCS using a plurality of virtual bays 705. Each virtual bay 705 contains the name of the destination assigned to a bay, whether the bay contains a cart or pallet, the type of tray (e.g., mail tray or tub) that will be delivered to the bay, and the location identifier assigned to the bay.

The scheme screen 700 also includes an icon window 710. The icon window 710 includes each created destination and an associated icon 712. The user can "drag and drop" one of the icons 712 from the icon window 710 into one of the virtual bays 705 in order to assign the bay a destination for sorting. Thus, when the sort scheme is created each location is told what destination is assigned to that location, if the items in that location will be mail trays 50 or tubs 55, and if the bay will contain a pallet 40 or a cart 45.

The scheme screen 700 also include virtual entry buttons 715, 720, 725, 730, and 735 to create a new sort scheme, save a sort scheme, edit a sort scheme, delete a sort scheme, open a sort scheme, and rename a sort scheme. Once a sort scheme is created, it can be later recalled in order to perform a sort.

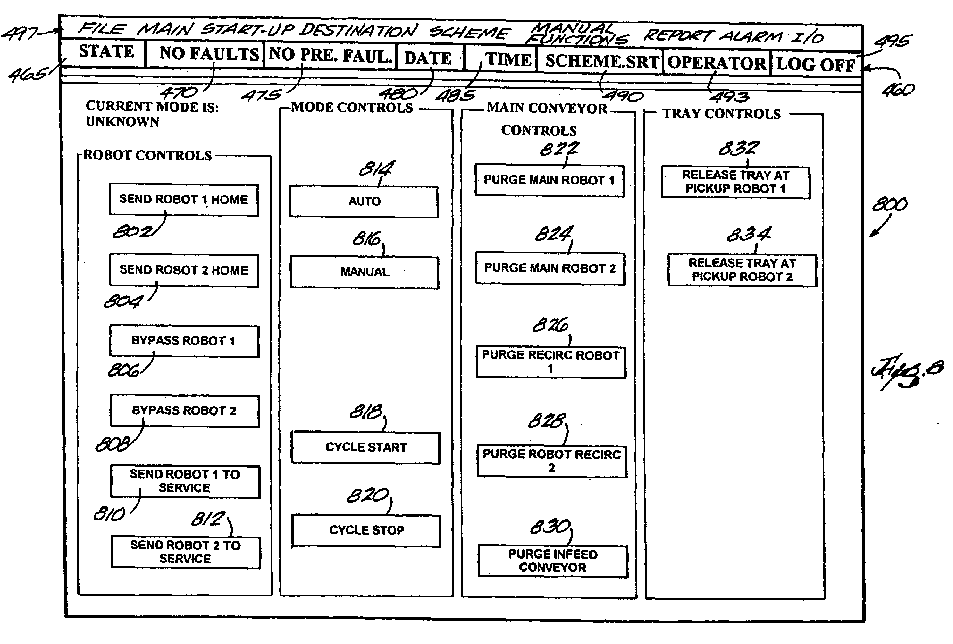

A manual functions screen 800 of the HMI is shown in Fig. 8. The manual functions screen 800 include virtual entry buttons 802-812 that can be activated by the operator to initiate software for performing selected manual operations on the system. Operations include sending one or both of the robots to the home or service positions, bypassing one of the robots, releasing the tray that is ready for pickup, and purging selected sections of the conveyor system. Each of these functions is assigned to a selected security level to prevent unauthorized personnel from performing these operations. The manual function screen 800 also allows an operator to select and control various system and robot controls. Mode controls 814-820 permit the user to select automatic operation, to select manual operation, to start a cycle, and to stop a cycle, respectively. The manual function screen 800 also provides an operator interface to control the conveyor system and robot end effector. The manual functions screen includes a first purge main conveyor button 822 for the first cell C1 in the RCS, a purge main conveyor button 824 for the second cell C2, a purge recirculating conveyor button 826 for the first cell C1, and a purge recirculating conveyor button 828 for the second cell C1. The manual functions screen may be configured to include a purge infeed conveyor button 830, a release tray control button 832 for the first robot, and a second release tray control button 834 for the second robot.

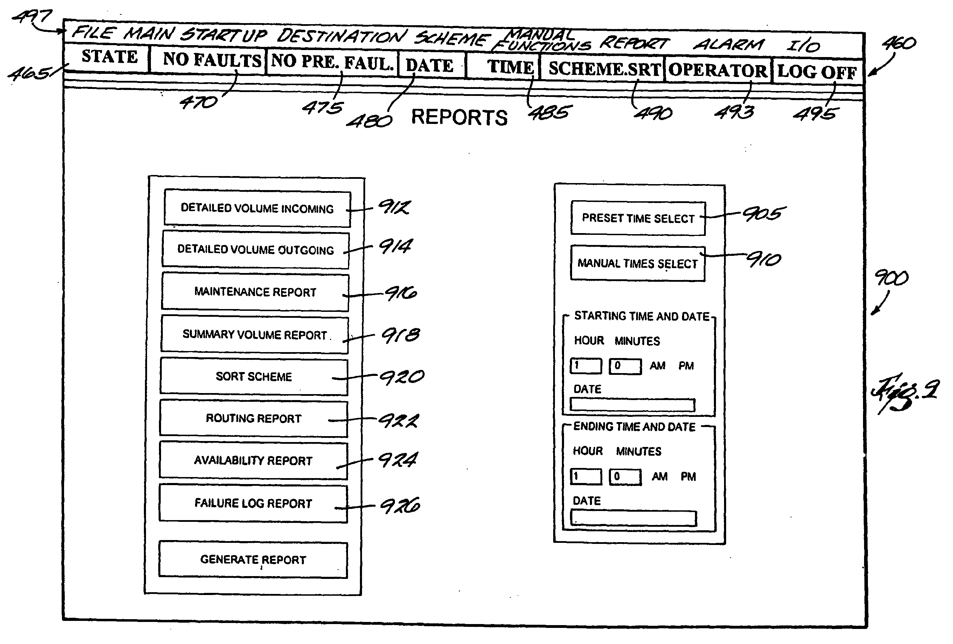

A reports screen 900 of the HMI is shown in Fig. 9. The reports screen includes virtual entry buttons that can be activated by the operator to generate reports. By generating reports, the operator can monitor the performance and throughput of the RCS 35. The reports screen 900 also includes a preset time select button 905 and a manual times select button 910. These buttons initiate software to generate reports based on pre-selected tours or shifts, or based on manually selected time periods. Through control buttons 912-926, the HMI allows reports to be created and printed for detailed volume incoming, detailed volume outgoing, maintenance, summary volume, sort scheme, routing, availability, and failure logs. A detailed volume incoming report shows every tray that is placed into one of the robots. The detailed volume outgoing report shows every tray that leaves the system, either by leaving in a full container or being rejected. The maintenance report displays all errors that occurred in the system. The summary volume report shows the total volume that was placed into each location. The sort scheme report shows which ZIP, CIN, DOD, and AIN codes are assigned to each location. The availability report calculates the up time, down time, and blocked time of the system. The routing report displays all the detailed information behind the destinations that have been entered into the system. The failure log report sorts the errors that have occurred in the system and displays the errors ranked by how often they occurred.

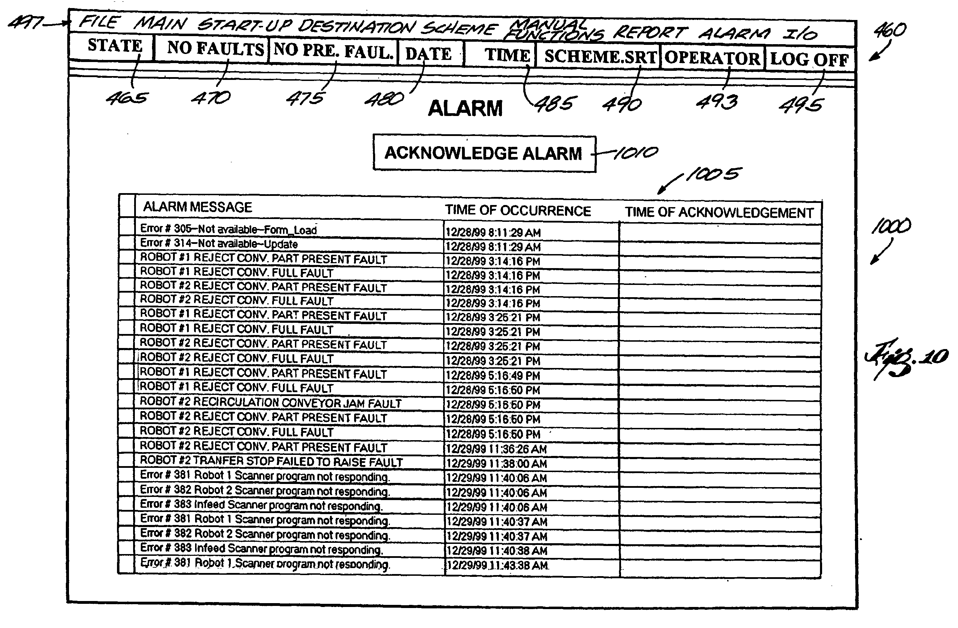

An alarm screen 1000 of the HMI is shown in Fig. 10. The alarm screen 1000 includes a window 1005 that displays alarms or faults that have occurred during the operation of the system. The window 1005 includes an alarm message, the time of occurrence, and the time for acknowledgement. The alarms are sorted such that the most recent alarm is placed at the top of the display. The alarm screen includes a virtual button 1010 for initiating software that allows the operator to acknowledge the alarm and, if possible, continue operation. Depending on the type of alarm, the RCS may continue sorting trays. The alarm screen 1000 provides a record of the alarms for performing maintenance to the RCS.

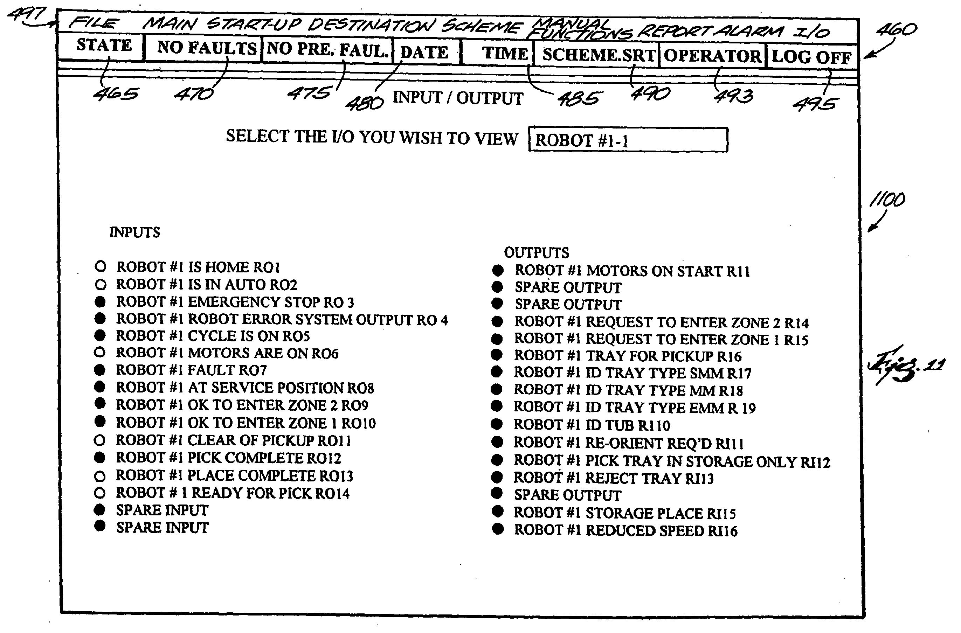

An input/output screen 1100 of the HMI is shown in Fig. 11. The input/output screen displays the name and status of selected inputs and outputs of the RCS 35. The screen assists the operator in debugging the RCS 35 when an alarm occurs.

A password screen 1200 of the HMI is shown in Fig. 13. The password screen 1200 creates operator names and passwords that are required for the security of the system 35. The password screen 1200 includes virtual buttons 1205, 1210, and 1215 to add a new user, delete a user, and edit the status of a user. The password screen 1200 also includes a dialogue box for selecting the level of security an operator is granted. The password screen 1200 also includes a tour configuration window 1220 for creating the start and end times of a tour or shift.

The operation of the HMI for the RCS should be apparent from the description and drawings herein and additional details are not provided. Many possible forms of the invention may be constructed based on the teachings set forth herein. Therefore, while the present invention has been described in reference to particular embodiments and examples, it should be understood that the invention is not confined to the particular construction and arrangement of the components illustrated and described, but embraces all forms encompassed by the following claims.

## Claims

1. A human machine interface for a robotic system, the interface comprising:
a graphical representation of a work cell having a plurality of bays, each bay including graphical indicia as to whether a container is present in the bay, the destination of the container, and the status of the container;
an operation bar depicting information regarding the operating state of the robotic system, the fault status of the robotic system, and the most recent sort scheme for the robotic system.

2. An interface as claimed in claim 1, further comprising:
a graphical representation of a second work cell.

3. An interface as claimed in claim 2, further comprising:
a graphical representation of a perimeter barrier around the first and second work cells, and wherein the graphical representation of the each of the two work cells is divided into two zones and the perimeter barrier includes closable access ways into each zone.

4. An interface as claimed in claim 3, further comprising a graphical representation of a conveyor in each cell.

5. An interface as claimed in claim 3, further comprising a pull-down menu.

6. An interface as claimed in claim 1, wherein each bay includes graphical information indicating the capacity of a container.

7. An interface as claimed in claim 5, wherein the pull-down menu includes a link to a screen.

8. An human machine interface for a robotic system, the interface comprising:
a status bar for displaying operating state information of the robotic system;
a main screen that includes a graphical representation of a work cell, a graphical representation of a mix of container types positioned within the work cell, an indication of the load status of each container displayed, and destination information for each container displayed;
a startup screen that provides a visual representation of conditions necessary to place the robotic system into an automatic operation mode;
a destination screen that permits the combination and modification of destination codes for trays;
a scheme screen that permits the modification and assignment of destinations to each bay;
a manual functions screen that permits manual operation of at least some of the functions of the robotic system;
a reports screen that permits monitoring of the performance of the robotic system; and
an alarm screen that displays alarms, faults, or both that have occurred in the robotic system.

9. An interface as claimed in claim 8, further comprising:
an input/output screen that displays the name and status of a predetermined number of inputs and outputs of the robotic system.

10. An interface as claimed in claim 8, further comprising:
a file menu.

11. An interface as claimed in claim 8, further comprising:
a password maintenance screen with a tour times option.

12. An interface as claimed in claim 8, wherein the scheme screen permits the modification and assignment of a tray type to each container.

13. An interface as claimed in claim 8, wherein the manual functions screen provides a mechanism for instructing a robot to move to a home position.

14. An interface as claimed in claim 8, wherein the manual functions screen provides a mechanism for instructing a robot to move to a service position.

15. An interface as claimed in claim 8, wherein the manual functions screen provides a mechanism for bypassing a robot.

16. An interface as claimed in 8, wherein the manual functions screen provides a mechanism for releasing a tray in the grasp of a robot.

17. An interface as claimed in claim 8, wherein the manual functions screen includes multiple security levels.

18. An interface as claimed in claim 8, wherein the reports screen includes inputs for adjusting reports according to predetermined time periods.

19. An interface as claimed in claim 8, wherein the reports screen includes a selection that generate reports based on volume.

20. An interface as claimed in claim 8, wherein the reports screen includes a selection that generate reports based on sort scheme.

21. An interface as claimed in claim 8, wherein the reports screen includes a selection that generate reports based on errors in the robotic system.

22. An interface as claimed in claim 8, wherein the reports screen includes a selection that generate reports based on down time of the system.

23. An interface as claimed in claim 8, wherein the reports screen includes a selection that generate reports based on destinations entered into the robotic system.

24. A robotic system for containerizing a plurality of items, the system comprising:
a work cell having a plurality of bays;
a robot to deliver items to the plurality of bays;
a visual display; and
a controller connected to the robot and the visual display, the controller operable to instruct the robot to deliver the items to the bays according to a sort scheme, and operable to provide an interface to an operator on the visual display, the interface comprising:
a first screen comprising a graphical representation of the work cell including each bay, and status information for each bay of the work cell.

25. A robotic system as claimed in claim 24, wherein the first screen further comprises an operations area that depicts information regarding a most recent sort scheme of the robotic system

26. A robotic system as claimed in claim 24, wherein the status information of each bay includes a destination for the bay.

27. A robotic system as claimed in claim 24, wherein the status information for each bay includes the number of items within the bay.

28. A robotic system as claimed in claim 24, wherein the status information for each bay includes a location identifier.

29. A robotic system as claimed in claim 24, wherein the first screen includes a display bar that depicts information regarding the operating state of the system.

30. A robotic system as claimed in claim 29, wherein the display bar depicts information regarding the fault status of the system.

31. A robotic system as claimed in claim 29, wherein the display bar depicts information regarding the most current fault of the system.

32. A robotic system as claimed in claim 29, wherein the first screen includes a mechanism to select a new sort scheme.

33. A robotic system as claimed in claim 24, wherein the first screen further comprises a graphical representation of a perimeter barrier.

34. A robotic system as claimed in claim 24, wherein the interface further comprises a second screen having a visual representation of conditions necessary to have the controller operate the robotic system in an automatic operations mode.

35. A robotic system as claimed in claim 24, wherein the interface further comprises a second screen that permits creation and modification of destinations.

36. A robotic system as claimed in claim 35, wherein the second screen comprises a destination list area that depicts all of the created destinations.

37. A robotic system as claimed in claim 24, wherein the interface further comprises a second screen that permits the assignment of destination codes to each bay of the work cell.

38. A robotic system as claimed in claim 37, wherein the second screen permits the modification and assignment of a tray type to each bay.

39. A robotic system as claimed in claim 24, wherein the interface further comprises a second screen that permits manual operation of at least some functions of the robotic system.

40. A robotic system as claimed in claim 24, wherein the interface further comprises a second screen that permits the generation of reports.

41. A robotic system as claimed in claim 40, wherein the second screen includes inputs for adjusting the reports according to predetermined time periods.

42. A robotic system as claimed in claim 40, wherein the second screen includes selections that generate the reports based on volume.

43. A robotic system as claimed in claim 40, wherein the second screen includes selections that generate reports based on sort scheme.

44. A robotic system as claimed in claim 40, wherein the second screen includes selections that generate reports based on errors in the robotic system.

45. A robotic system as claimed in claim 40, wherein the second screen includes selections that generate reports based on down time of the system.

46. A robotic system as claimed in claim 40, wherein the second screen includes selections that generate reports based on destinations entered into the robotic system.

47. A method of sorting a plurality of items with a robotic system, the method comprising;
generating a virtual representation of the robotic system, the representation including a plurality of virtual bays, each virtual bay including status information for that bay; and
generating an operations bar depicting information regarding a sort scheme for the robotic system.

48. The method as claimed in claim 47,further comprising:
generating a fault status of the robotic system on the visual representation.

49. The method as claimed in claim 47, wherein the status information includes a destination of a container, a number of items in the container, a location identifier for the container, and the capacity of the container.

50. The method as claimed in claim 47, wherein the representation of the robotic system includes a perimeter barrier.

51. The method as claimed in claim 47, wherein the status information includes color graphics indicating whether the container is empty, partially full, or full.

52. A method of setting-up a work cell for a robotic sorting system, the method comprising:
creating a sort scheme;
graphically representing a desired work cell on a visual display unit;
printing the desired work cell on paper; and
arranging the work cell of the robotic system to mimic the desired work cell printed on paper.

53. A method of creating a sort scheme for a robotic system, the method comprising:
providing a visual representation of a work cell having a plurality of bays;
providing an icon window adjacent to the visual representation of a work cell, the icon window having a plurality if icons each with an associated destination;
dragging and dropping at least one of the icons into one of the bays.
